# EUROPÄISCHE PATENTANMELDUNG

(11) **EP 2 679 449 A1**
(43) Veröffentlichungstag der Anmeldung: **01.01.2014**
(21) Anmeldenummer: 13169488.7
(22) Anmeldetag: 28.05.2013
(51) Int. Cl.: B60R 21/013, B60R 21/015

(54) **Verfahren und Steuergerät zur Ansteuerung von zumindest einem reversibel aktivierbaren Insassenschutzsystem für ein Fahrzeug**

(30) Priorität: 26.06.2012 DE 102012210882
(71) Anmelder: ROBERT BOSCH GMBH, 70442 Stuttgart (DE)
(72) Erfinder: Wellhoefer, Matthias Marcus, 70499 Stuttgart (DE); Nitschke, Werner, 71679 Asperg (DE)

(57) **Zusammenfassung**

Die Erfindung betrifft ein Verfahren (200) zur Ansteuerung von zumindest einem reversiblen Insassenschutzsystem (120) für ein Fahrzeug (100). Das Verfahren weist auf einen Schritt des Einlesens (210) zumindest eines Bremsanforderungssignals (130), wobei das Bremsanforderungssignal (130) ein Signal einer Bremsanforderung repräsentiert. Weiterhin weist das Verfahren einen Schritt des Ableitens (220) einer Aufprallinformation aus dem zumindest einen Bremsanforderungssignal (130) als Aufprallinformation (155) auf. Weiterhin weist das Verfahren einen Schritt des Erstellens und/oder Veränderns (230) eines Steuersignals (163) unter Einbeziehen der Aufprallinformation (155) auf, um das zumindest eine reversibel aktivierbare Insassenschutzsystem (120) anzusteuern, wobei das reversibel aktivierbare Insassenschutzsystem (120) einen reversibel aufblasbarer Luftsack aufweist und/oder das Verfahren (200) weist einen Schritt des Veränderns (230) eines Bremssignals (166) unter Berücksichtigung der Aufprallinformation (155) auf, um ein Bremssystem (170) des Fahrzeugs (100) anzusteuern.

## Beschreibung

### Stand der Technik

Die vorliegende Erfindung bezieht sich auf ein Verfahren zur Ansteuerung von zumindest einem reversibel aktivierbaren Insassenschutzsystem für ein Fahrzeug, auf ein entsprechendes Steuergerät sowie auf ein entsprechendes Computerprogrammprodukt.

Als Stand der Technik sind momentan adaptive Airbags und reversibel aktivierbare Rückhaltemittel wie Gurtstraffer, Kopfstützen etc. bekannt. ESP/ABS gehört ebenfalls zum Stand der Technik. Zukünftige Rückhaltemittel werden immer mehr personalisiert und regelbar beziehungsweise mindestens stetig stellbar gestaltet. Es wird auch bereits an Airbags gearbeitet, die mehrfach zündbar beziehungsweise auslösbar und dosierbar sind. Innenraumsensorik und Umfeldsensorik sind ebenfalls bekannt.

Die DE 10 2010 003297 A1 offenbart ein Verfahren zur Steuerung mindestens einer reversiblen Insassenschutzmaßnahme eines Precrash-Sicherheitssystems, insbesondere eines reversiblen Gurtstraffers.

### Offenbarung der Erfindung

Vor diesem Hintergrund wird mit der vorliegenden Erfindung ein Verfahren zur Ansteuerung von zumindest einem reversibel aktivierbaren Insassenschutzsystem für ein Fahrzeug, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass Insassen (d. h. zumindest ein Insasse) in einem Fahrzeug schonender geschützt werden können, wenn mit mehr Zeit ein Insassenschutzsystem weniger aggressiv aktiviert werden kann, und dass das dosierbare und/oder reversibel aktivierbare Insassenschutzsystem zusammen mit dem Bremssystem einen hohen Insassenschutz bieten kann, wenn bereits vor einem drohenden Aufprall das Insassenschutzsystem entsprechend an die Situation angepasst aktiviert wird.

Die vorliegende Erfindung schafft ein Verfahren zur Ansteuerung von zumindest einem reversibel aktivierbaren Insassenschutzsystem für ein Fahrzeug, wobei das Verfahren die folgenden Schritte aufweist:
Einlesen zumindest eines Bremsanforderungssignals, wobei das Bremsanforderungssignal ein Signal einer Bremsanforderung repräsentiert;
Ableiten einer Aufprallinformation aus dem des zumindest einen Bremsanforderungssignal, wobei die Aufprallinformation zumindest einen zu erwartenden Aufprall eines Objektes auf das Fahrzeug repräsentiert; und
Erstellen eines Steuersignals auf der Basis der Aufprallinformation, um das zumindest eine reversibel aktivierbare Insassenschutzsystem anzusteuern, wobei das reversibel aktivierbare Insassenschutzsystem zumindest einen reversibel aufblasbaren Luftsack aufweist und/oder Verändern eines Bremssignals auf der Basis der Aufprallinformation, um ein Bremssystem des Fahrzeugs anzusteuern.

Bei dem reversibel aktivierbaren Insassenschutzsystem kann es sich unter anderem um ein reversibel auslösbares Rückhaltemittel wie einen reversibel aufblasbaren Luftsack, einen Gurtstraffer, eine Sitzverstellung, einen reversibel aufblasbaren Gurt-Luftsack (auch als Gurtbag bezeichnet), eine Kopfstütze und/oder einen Überrollbügel handeln. In einem Ausführungsbeispiel kann das reversibel aktivierbare Insassenschutzsystem ausschließlich einen reversibel aufblasbaren Luftsack aufweisen. Das Insassenschutzsystem kann als ein dosierbares Rückhaltemittel ausgebildet sein. Ein Luftsack kann auch als Airbag bezeichnet werden. Ein reversibel aktivierbares Insassenschutzsystem kann wiederholt ausgelöst werden. Die Auslösung eines reversibel aktivierbaren Insassenschutzsystems kann umkehrbar sein. Das Insassenschutzsystem kann Personen in einem Fahrzeug schützen. Ein Fahrzeug kann ein Insassenschutzsystem und/oder reversibel aktivierbares Insassenschutzsystem aufweisen. Bei dem Fahrzeug kann es sich um ein (motorgetriebenes) Kraftfahrzeug handeln. Bei dem Fahrzeug kann es sich somit beispielsweise um ein Personenfahrzeug, ein Nutzfahrzeug oder ein Kraftrad handeln. Das Fahrzeug kann ein Bremssystem aufweisen, welches ausgebildet ist, die Bewegung des Fahrzeugs abzubremsen. Das Bremssystem kann mittels eines Bremssignals angesteuert werden. Das Bremssystem kann ein ABS-System aufweisen. Das Bremssystem kann direkt von dem Bremssignal angesteuert werden, wobei das Bremssignal derart ausgebildet ist, dass ein Blockieren der Räder verhindert werden kann. Von einem Fahrer des Fahrzeugs kann als eine Bremsanforderung ein Bremsanforderungssignal ausgelöst werden. Die Bremsanforderung kann eine Reaktion des Fahrers auf eine Verkehrssituation und/oder eine Fahrsituation darstellen. Aus einem Bremsanforderungssignal kann ein Bremssignal abgeleitet werden. Aus dem Bremsanforderungssignal kann eine Aufprallinformation abgeleitet werden. Diese Aufprallinformation kann einen Grad der Aufprallschwere, einen Ort des Aufpralls auf das Fahrzeug, einer Größe und/oder Bewegungsrichtung des auf das Fahrzeug auftreffenden Objektes oder eine ähnliche Risikoabschätzung für einen bevorstehenden Aufprall darstellen. Dabei kann die Aufprallinformation auch die Art eines bevorstehenden Aufpralls wie beispielsweise einen Frontalaufprall oder einen Seitenaufprall beinhalten.

Entsprechend einer Ausführungsform der vorliegenden Erfindung kann ein Grad der Aktivierung des reversibel aktivierbaren Insassenschutzsystems einstellbar sein, insbesondere vorbestimmte Einstellungsstufen aufweisen und das Steuersignal unter Einbeziehen der Aufprallinformation und der vorbestimmten Einstellungsstufen für das reversibel aktivierbare Insassenschutzsystem erstellt werden. Vorbestimmte Einstellungsstufen können im Falle eines Luftsackes ein unterschiedlich starkes Aufblasen bedeuten, oder ein Befüllen von nur einem Teil von Luftkammern des reversibel aktivierbaren Luftsackes. Hierdurch kann ein weicher Luftsack entstehen. Der Luftsack kann an die Gefahrensituation angepasst sein. Die Gefahrensituation kann mit der Aufprallinformation korrelieren und/oder ein Teil der Aufprallinformation darstellen. Auch ein Gurtstraffer kann unterschiedlich stark den Gurt anziehen. Bei einer geringen Gefahr für einen Aufprall kann es ausreichen, Gurtlose zu entfernen, bei einer hohen Gefahr kann es sinnvoll sein, den Gurt noch weiter zu straffen. Durch vorbestimmte Einstellungsstufen kann ein Insasse im Fahrzeug vor Beginn eines Aufpralls in eine optimale Insassenposition gebracht werden. Unter Einstellungsstufen können auch Dosierstufen verstanden werden, die einen unterschiedlichen Grad an Schutzwirkung des Insassenschutzsystems repräsentieren. Beispielsweise können in den unterschiedlichen Einstellungsstufen/Dosierstufen unterschiedliche Aufblasstufen eines reversibel aufblasbaren Luftsacks (Airbags) verstanden werden. Ein reversibel aktivierbares Insassenschutzsystem kann somit dosierbar ausgelöst werden. Hierunter kann verstanden werden, dass vorbestimmte Einstellungsstufen ansteuerbar sind. In einer Ausführungsform können beispielsweise die Einstellungsstufen so fein sein, dass sich ein reversibel aufblasbares Luftkissen ein variables Befüllen des Luftkissens realisieren lässt.

Günstig ist es auch, wenn in einer Ausführungsform zumindest der reversibel aufblasbare Luftsack in einer Bremsphase des Fahrzeugs vor dem Aufprall aktiviert wird. So kann bei einem drohenden Aufprall, dem beispielsweise ein starkes Bremsen vorausgeht, ein reversibel aktivierbares Insassenschutzsystem vorbefüllt werden und im Ernstfall nur noch der letzte Rest zur Vollbefüllung befüllt werden. Dies kann Zeit sparen und somit ein weniger "aggressives" (d. h. schnelles) Befüllen erlauben, wodurch insbesondere beim reversibel aufblasbare Luftsack mögliche Beschädigungen beim schnellen Aufblasen vermieden werden können.

Auch ist es günstig, wenn im Schritt des Einlesens zumindest ein Aufprallsignal eingelesen wird, wobei das Aufprallsignal ein Signal einer Umfeldsensorik, einer Aufprallsensorik, eines Personenschutzsensors, einer Innenraumsensorik und/oder einer vorausschauenden Aufprallsensorik repräsentiert. Um Insassenschutzsysteme optimal auszulösen, kann es vorteilhaft sein, wenn ein Aufprall vorhergesagt werden kann, sowohl vom Zeitpunkt des Aufpralls als auch sein Typ und/oder die Aufprallschwere. Ein Aufprallsignal kann Informationen über den Zeitpunkt des Aufpralls als auch den Typ des Aufpralls und gleichzeitig oder alternativ über die Schwere des Aufpralls repräsentieren.

Ferner kann im Schritt des Erstellens ein Steuersignal erstellt werden, um eine Mehrzahl von reversibel aktivierbaren Insassenschutzsystemen anzusteuern. Wenn eine Mehrzahl von irreversibel auslösbaren Insassenschutzsystemen angesteuert wird, kann eine Mehrzahl von Fahrzeuginsassen geschützt werden und gleichzeitig oder alternativ ein Fahrzeuginsasse durch mehrere auf ihn wirkender Insassenschutzsysteme besser geschützt werden. Bei der Mehrzahl von Insassenschutzsystemen kann es sich um eine Mehrzahl von Insassenschutzsystemen des gleichen Typs handeln, insbesondere eine Mehrzahl von reversibel aufblasbaren Luftsäcken, beispielsweise für Insassen des Fahrzeugs, die an unterschiedlichen Positionen im Fahrzeug sitzen. Bei einem reversibel aufblasbaren Luftsack kann es sich um einen reversibel aufblasbaren Front-Airbag, einen reversibel aufblasbaren Seiten-Airbag und/oder einen reversibel aufblasbaren Kopf-Airbag handeln. Bei der Mehrzahl von reversibel aufblasbaren Insassenschutzsystemen kann es sich auch um zumindest zwei unterschiedliche Typen von reversibel aufblasbaren Insassenschutzsystemen handeln.

In einer Ausführungsform kann im Schritt des Erstellens ein Steuersignal für das reversibel auslösbare Insassenschutzsystem zumindest einen Gurtstraffer, eine Sitzverstellung, ein reversibel aufblasbaren Gurt-Luftkissen, eine Kopfstütze und/oder einen Überrollbügel aufweisen. Auch durch unterschiedliche reversibel aktivierbare Insassenschutzsysteme kann die Sicherheit des zumindest einen Insassen in dem Fahrzeug erhöht werden. Dabei kann jedes Insassenschutzsystem und/oder reversibel aktivierbare Insassenschutzsystem seine Vorzüge aufweisen.

Ferner kann im Schritt des Einlesens das Bremsanforderungssignal eingelesen werden, das von einem Bremsassistenten, einem ABS-Steuergerät, einem ESP-Steuergerät und/oder von einem Benutzer erzeugt wurde. Der Benutzer kann ein Fahrer des Fahrzeugs sein. Das Bremsanforderungssignal kann eine Reaktion des Benutzers auf eine Fahr- und/oder Gefahren-Situation darstellen. Durch den Einsatz von Fahrer-Assistenz-Systemen in dem Fahrzeug kann das Bremsanforderungssignal auch als ein Signal von einem solchen Fahrer-Assistenzsystem wie einem Bremsassistenten oder als ein Signal von einem Steuergerät, wie einem ABS-Steuergerät und/oder einem ESP-Steuergerät, verstanden werden.

Gemäß einer Ausführungsform kann das reversibel aktivierbare Insassenschutzsystem in einen Anfangszustand zurückgesetzt werden, wenn kein Bremsanforderungssignal anliegt und/oder aus dem Bremsanforderungssignal keine Information über einen bevorstehenden Aufprall und/oder keine Gefahr ableitbar ist. Durch das Zurückführen des reversibel aktivierbaren Insassenschutzsystems in seinen Anfangszustand kann das reversibel aktivierbare Insassenschutzsystem für eine kommende Gefahrensituation vorbereitet und die Insassen des Fahrzeugs auch in einer Reihe von Gefahrensituationen immer optimal geschützt werden. Insbesondere wenn es nicht zu einem erwarteten Aufprall kommt, kann es von Vorteil sein, den Anfangszustand des reversibel aktivierbaren Insassenschutzsystems wieder herzustellen. In einer Ausführungsform kann das reversibel aktvierbare Insassenschutzsystem in einen Anfangszustand zurückgesetzt werden, wenn aus dem Aufprallsignal keine Information über einen bevorstehenden Aufprall ableitbar ist.

Ein verbesserter sanfter Insassenschutz kann durch optimale Choreografie von reversibel aktivierbaren, dosierbaren Insassenschutzsystemen mit der Bremse erfolgen. Ein Aspekt des vorgeschlagenen Verfahrens ist, dass mindestens ein reversibel aktivierbares Insassenschutzsystem zusammen mit dem Bremssystem eine wechselseitige Ansteuerung erfährt, um einerseits die Aggressivität heutiger Insassenschutzsysteme zu reduzieren und dabei auch den Insassen besser zu schützen.

Ein weiterer Aspekt des vorgeschlagenen Verfahrens ist, für das Aktivieren der Insassenschutzsysteme wesentlich mehr Zeit zu bekommen, sodass die Schutzfunktion weniger aggressiv aktiviert werden kann. Wenn 20ms für das Befüllen eines Luftkissens/Airbag Zeit ist, kann dies zu einem sehr harten Luftkissen führen, wenn 2s für das Aufblasen eines Airbags zur Verfügung stehen, so kann ein weiches Aufblasen (Softairbag) des Luftkissens erreicht werden und die Insassenschutzsysteme können dann so eingesetzt werden, dass eine optimale Insassenposition zu Beginn des Aufpralls ohne ein Zutun des Insassen des Fahrzeugs erreicht werden kann. Im Extremfall kann dadurch sogar der Gurt entfallen. Ein weiterer Aspekt des vorgestellten Verfahrens ist weiterhin die frühe Aktivierung eines reversibel aufblasbaren Luftsackes in der Bremsphase. Dabei kann eine Steuerung oder mindestens eine Parametrisierung des dosierbaren reversibel aktivierbaren Insassenschutzsystems (Rückhaltemittels) erfolgen, das heißt zum Beispiel in Abhängigkeit der Bremsstärke kann auch der Airbaginnendruck dosiert werden. Vorteilhaft sind ein besserer und schonenderer Insassenschutz, da der Airbag sich weich entfalten kann. Von Vorteil ist, dass eine sogenannte Out-of-Position Situation, d.h. eine Situation in der der zu schützende Insasse sich in einer Weise im Fahrzeug aufhält, in der die aktivierbaren Insassenschutzmittel eine geringere Schutzwirkung aufweisen, aufgelöst werden kann, da genügend Zeit vorhanden ist und der Insasse bis zum Beginn des Aufpralls weich in eine optimale Position bewegt werden kann.

Der reversibel aufblasbare Luftsack kann bei einer starken Bremsung oder Notbremsung initial aktiviert werden. Bei einer automatisch aktivierten Notbremsung kann das dosierbare Insassenschutzsystem recht zügig aufgeblasen werden, je nachdem wie viel Zeit noch bis zum Aufprall bleibt, kann dies auch moderater erfolgen. Bremst der Fahrer selbst schwach bis mittelmäßig und es handelt sich noch nicht um eine Notbremsung und die Umfeldsensorik detektiert aber einen drohenden Crash, so kann das dosierbare Insassenschutzsystem mindestens etwas vorbefüllt werden, um nachher im Ernstfall Zeit zu sparen, und um bei einem Aufprall nur noch den letzten Rest befüllen zu müssen. Erfolgt kein Aufprall, beziehungsweise wenn die Gefahr vorüber ist, kann das Insassenschutzsystem (dosierbare Rückhaltemittel) wieder entleert werden. Bei vorhandener Innenraumsensierung kann die vorgeschlagene Erfindung auch dazu genutzt werden, einen Insassen im Fahrzeug im Fall eines Out-of-Positions ohne Zutun des Insassen selbst in eine günstige Position zu bringen. Bei dem Insassen kann es sich um einen Fahrer, einen Beifahrer und oder Mitfahrer handeln. Auch bei einem Bremsvorgang kann das Insassenschutzsystem der Bremsvorverlagerung gleich präventiv entgegenwirken. Insbesondere beim Rollovercrash (Überschlag) kann dies auch sehr vorteilhaft sein, da es viele schwere Verletzungen bis hin zu Todesfällen bei Rollover/Überschlag gibt, dadurch bedingt, dass der Kopf zu nah an die Seitenscheiben oder sogar außerhalb der Schutzzelle des Fahrzeugs gerät. Weiterhin kann erfindungsgemäß vorgesehen sein, dass ein aufeinander abgestimmtes Vorgehen zwischen einzelnen Bremseingriffen (Bremsruck) und einzelnen Dosierstufen des Insassenschutzsystems selbst während der ersten Aufprallphase (Crashphase) durchgeführt wird, um durch eine optimale Choreografie zwischen Bremsverhalten und Insassenschutzsystem den Insassen noch schonender zu schützen, indem durch das Zusammenspiel einzelne Belastungspeaks im Beschleunigungsverlauf gezielt abgeschwächt werden können, um die Verletzungsschwere zu reduzieren (Stocker-Airbag). In der vorstehenden Ausführungsform wurde nur das Wechselspiel zwischen Bremse und einem Insassenschutzsystem beschrieben. Vorteilhafterweise kann eine optimale Choreografie dadurch erreicht werden, dass die Bremse zusammen mit verschiedenen Insassenschutzsystemen kombiniert wird, z. B. Luftkissen (Airbags), Gurte, Sitze, etc. Ziel ist dabei immer, den Insassen rechtzeitig und schonend in die beste Position für den zu erwartenden Aufprall zu bewegen. (z. B. Seitencrash: möglichst weit weg von der Tür; Frontcrash/Heckcrash Rücken an Rückenlehne, Kopf an Kopfstütze, ...). Durch diese Erfindung kann der Insasse vor dem Aufprall idealerweise in Aufprallrichtung von zwei Polstern/Kissen eingebettet sein. Weiterhin kann man reversibel aufblasbare Gurtbags vorteilhaft zur sanften Positionierung des Insassen vor dem Aufprall nutzen.

Die vorgeschlagene Lösung hat den Vorteil, dass Synergien zwischen aktiver und passiver Sicherheit genutzt werden können.

Ferner ist es günstig, wenn in einer Ausführungsform eine unnötige Mehrfachauslösung von Insassenschutzsystemen mittels eines Schritts des Filterns und Bewertens der Aufprallinformation erfolgt.

Günstig ist es auch, wenn in einer Ausführungsform das reversibel aktivierbare Insassenschutzsystem mit einem von der Aufprallinformation abhängigen Volumenstrom befüllt wird, insbesondere liegt ein größerer Volumenstrom an, wenn die Aufprallinformation für einen erwarteten Aufprall ein höheres Risiko bewertet und/oder einen Aufprall in einer kurzen Zeit ausgibt, als wenn die Aufprallinformation für einen Aufprall ein niedrigeres Risiko bewertet und/oder einen Aufprall in einer längeren Zeit ausgibt.

Die vorliegende Erfindung schafft ferner ein Steuergerät, das ausgebildet ist, um die Schritte des erfindungsgemäßen Verfahrens in entsprechenden Einrichtungen durchzuführen, anzusteuern oder umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine schematische Darstellung eines Fahrzeugs mit einem Blockschaltbild einer Vorrichtung gemäß einem Ausführungsbeispiel der vorliegenden Erfindung; und
- Fig. 2: ein Ablaufdiagramm eines Verfahrens gemäß einem Ausführungsbeispiel der vorliegenden Erfindung;

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

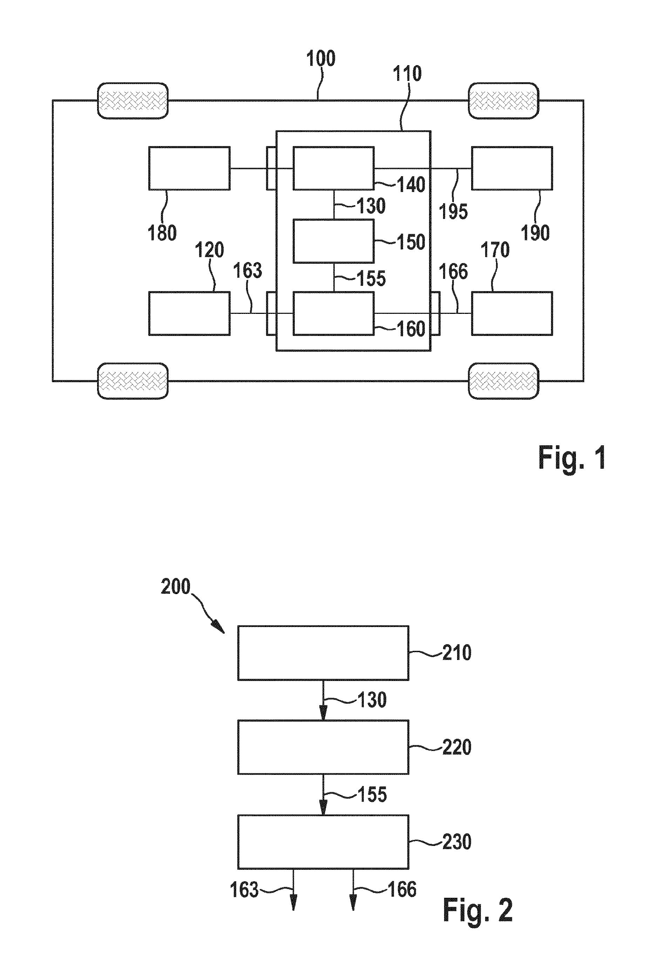

Fig. 1 zeigt eine schematische Darstellung eines Fahrzeugs mit einem Blockschaltbild einer Vorrichtung gemäß einem Ausführungsbeispiel der vorliegenden Erfindung. Das Fahrzeug 100 weist auf eine Vorrichtung 110 zum Ansteuern von zumindest einem reversibel aktivierbaren Insassenschutzsystem 120 auf. Die Vorrichtung 110 weist eine Schnittstelle zum Einlesen eines Bremsanforderungssignals 130, eine Einrichtung zum Einlesen 140 eines Bremsanforderungssignals 130, eine Einrichtung zum Bewerten 150 des Bremsanforderungssignals 130, wobei die Einrichtung zum Bewerten 150 eine Aufprallinformation 155 ausgibt, sowie eine Einrichtung 160 zum Erstellen eines Steuersignals 163 zur Ansteuerung des Insassenschutzsystems 120 und gleichzeitig oder alternativ zum Erstellen eines Bremssignals 166 zur Ansteuerung eines Bremssystems 170 des Fahrzeugs 100. Das Fahrzeug 100 weist weiterhin eine Einrichtung 180 zum Erzeugen eines Bremsanforderungssignals 130 sowie eine Einrichtung 190 zum Erzeugen eines Aufprallsignals 195 auf. Je nach Ausführungsbeispiel handelt es sich bei der Einrichtung 180 zum Erzeugen eines Bremsanforderungssignals 130 um ein Bremspedal, einen Bremsassistenten, ein ABS- und/oder ESP-System. Dabei ist in einem nicht gezeigten Ausführungsbeispiel auch eine Kombination möglich, sodass beispielsweise eine Bremsanforderung des Fahrers über ein Bremspedal an einen Bremsassistenten geleitet wird und nach einer Verarbeitung im Bremsassistenten ein Bremsanforderungssignal an die entsprechende Schnittstelle der Vorrichtung 110 zum Ansteuern von zumindest einem reversibel aktivierbaren Insassenschutzsystem 120 bereitgestellt wird. Bei der Einrichtung 190 zum Erzeugen eines Aufprallsignals 195 handelt es sich je nach Ausführungsbeispiel um eine Umfeldsensorik, eine Aufprallsensorik, einen Personenschutzsensor, eine Innenraumsensorik und/oder eine vorausschauende Aufprallsensorik. In einem weiteren nicht gezeigten Ausführungsbeispiel handelt es sich bei der Einrichtung 190 zum Erzeugen eines Aufprallsignals 195 um ein Steuergerät, in dem Informationen und/oder Signale von einer Mehrzahl von Sensoren und/oder Einrichtungen wie Umfeldsensorik, Aufprallsensorik, Personenschutzsensor, Innenraumsensorik und/oder vorausschauende Aufprallsensorik, zum Erzeugen eines Aufprallsignals 195 verarbeitet werden.

In dem in Fig. 1 gezeigten Ausführungsbeispiel steuert das Steuersignal 163 ein reversibel aktivierbares Insassenschutzsystem 120 an. In einem weiteren nicht gezeigten Ausführungsbeispiel steuert das Steuersignal 163 eine Mehrzahl von reversibel aktivierbaren Insassenschutzsystemen an. Die Vorrichtung 110 zum Ansteuern von zumindest einem reversibel aktivierbaren Insassenschutzsystem 120 weist eine Schnittstelle zum Bereitstellen des Steuersignals 163 auf. In dem in Fig. 1 gezeigten Ausführungsbeispiel weist die Vorrichtung 110 zum Ansteuern von zumindest einem reversibel aktivierbaren Insassenschutzsystem 120 weiterhin eine Schnittstelle zum Bereitstellen des Bremssignals 166 auf.

Fig. 2 zeigt ein Ablaufdiagramm eines Verfahrens gemäß einem Ausführungsbeispiel der vorliegenden Erfindung. Das Verfahren 200 zur Ansteuerung von zumindest einem reversibel aktivierbaren Insassenschutzsystem für ein Fahrzeug weist einen Schritt 210 des Einlesens, einen Schritt 220 des Ableitens und einen Schritt 230 des Erstellens und/oder Veränderns auf. Bei dem Verfahren 200 kann es sich um ein Verfahren handeln, welches auf einer in Fig. 1 gezeigten Vorrichtung 110 zum Ansteuern von zumindest einem reversibel aktivierbaren Insassenschutzsystem 120 für ein Fahrzeug 100 ausgeführt wird. Im Schritt 210 des Einlesens wird zumindest ein Bremsanforderungssignal 130 eingelesen, wobei das Bremsanforderungssignal 130 ein Signal einer Bremsanforderung repräsentiert. Im Schritt 220 des Ableitens wird aus dem zumindest einen Bremsanforderungssignal 130 eine Aufprallinformation 155 abgeleitet. Im Schritt 230 des Ableitens und/oder Veränderns wird ein Steuersignal 163 auf der Basis der Aufprallinformation 155 erstellt, um zumindest ein reversibel aktivierbares Insassenschutzsystem 120 anzusteuern. Gleichzeitig oder alternativ wird im Schritt 230 des Erstellens und/oder Veränderns ein Bremssignal 166 unter Einbeziehen der Aufprallinformation 155 verändert, um ein Bremssystem des Fahrzeugs anzusteuern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zur Ansteuerung von zumindest einem reversiblen Insassenschutzsystem (120) für ein Fahrzeug(100), wobei das Verfahren (200) die folgenden Schritte aufweist:
Einlesen (210) zumindest eines Bremsanforderungssignals (130), wobei das Bremsanforderungssignal (130) ein Signal einer Bremsanforderung repräsentiert;
Ableiten (220) einer Aufprallinformation (155) aus dem zumindest einen Bremsanforderungssignal (130), wobei die Aufprallinformation (155) zumindest einen zu erwartenden Aufprall eines Objektes auf das Fahrzeug (100) repräsentiert; und
Erstellen (230) eines Steuersignals (163) auf der Basis der Aufprallinformation (155), um das zumindest eine reversibel aktivierbare Insassenschutzsystem (120) anzusteuern, wobei das reversibel aktivierbare Insassenschutzsystem (120) zumindest einen reversibel aufblasbaren Luftsack aufweist und/oder
Verändern (230) eines Bremssignals (166) unter Berücksichtigung der Aufprallinformation (155), um ein Bremssystem (170) des Fahrzeugs (100) anzusteuern.

2. Verfahren (200) gemäß Anspruch 1, bei dem ein Grad der Aktivierung des reversibel aktivierbaren Insassenschutzsystems (120) einstellbar ist, insbesondere vorbestimmte Einstellungsstufen aufweist und das Steuersignal unter Einbeziehen der Aufprallinformation (155) und der vorbestimmten Einstellungsstufen für das reversibel aktivierbare Insassenschutzsystem (120) erstellt wird.

3. Verfahren (200) gemäß einem der vorangegangenen Ansprüche, bei dem zumindest der reversibel aufblasbare Luftsack in einer Bremsphase des Fahrzeugs (100) vor dem Aufprall aktiviert wird.

4. Verfahren (200) gemäß einem der vorangegangenen Ansprüche, bei dem im Schritt des Einlesens (210) zumindest ein Aufprallsignal (195) eingelesen wird, wobei das Aufprallsignal (195) ein Signal einer Umfeldsensorik, einer Aufprallsensorik, eines Personenschutzsensors, einer Innenraumsensorik und/oder einer vorausschauenden Aufprallsensorik repräsentiert.

5. Verfahren (200) gemäß einem der vorangegangenen Ansprüche, bei dem im Schritt des Erstellens (230) ein Steuersignal (163) erstellt wird, um eine Mehrzahl von reversibel aktivierbaren Insassenschutzsystemen (120) anzusteuern.

6. Verfahren (200) gemäß einem der vorangegangenen Ansprüche, bei dem im Schritt des Erstellens (230) ein Steuersignal für das reversibel aktivierbare Insassenschutzsystem (120) erstellt wird, welches ferner zumindest einen Gurtstraffer, eine Sitzverstellung, ein reversibel aufblasbares Gurt-Luftkissen, eine Kopfstütze und/oder einen Überrollbügel aufweist.

7. Verfahren (200) gemäß einem der vorangegangenen Ansprüche, bei dem im Schritt des Einlesens (210) das Bremsanforderungssignal (130) eingelesen wird, das von einem Bremsassistenten, einem ABS-Steuergerät, einem ESP-Steuergerät und/oder von einem Benutzer erzeugt wurde.

8. Verfahren (200) gemäß einem der vorangegangenen Ansprüche, bei dem das reversibel aktivierbare Insassenschutzsystem in einen Anfangszustand zurückgesetzt wird, wenn kein Bremsanforderungssignal (130) anliegt und/oder aus dem Bremsanforderungssignal (130) keine Information über einen bevorstehenden Aufprall und/oder keine Gefahr ableitbar ist.

9. Steuergerät (110), das Einrichtungen (140, 150, 160) aufweist, die ausgebildet sind, um die Schritte eines Verfahrens (200) gemäß einem der Ansprüche 1 bis 8 durchzuführen.

10. Computer-Programmprodukt mit Programmcode zur Durchführung des Verfahrens (200) nach einem der Ansprüche 1 bis 8, wenn das Programmprodukt auf einer Vorrichtung (110) ausgeführt wird.
